Europäisches Patentamt

European Patent Office

Office européen des brevets

(11) Publication number: **0 191 620**
A2

(12) # EUROPEAN PATENT APPLICATION

(21) Application number: 86300890.0

(22) Date of filing: 10.02.86

(51) Int. Cl.⁴: **B 21 J 15/34**

(30) Priority: 14.02.85 US 701924

(43) Date of publication of application: 20.08.86
Bulletin 86/34

(84) Designated Contracting States: DE FR GB IT SE

(71) Applicant: **TUCKER FASTENERS LIMITED, Walsall Road, Birmingham B42 1BP (GB)**
(84) Designated Contracting States: **GB**

(71) Applicant: **USM Corporation, 426 Colt Highway, Farmington Connecticut 06032 (US)**
(84) Designated Contracting States: **DE FR IT SE**

(72) Inventor: **Hirsch, Richard F., 535 W. Duarte Road Flat 5, Arcadia California 91006 (US)**

(74) Representative: **Spencer, Hubert John et al, Emhart Patents Department P.O. Box 88 Ross Walk, Belgrave Leicester LE4 5BX (GB)**

(54) Fastener presentation device.

(57) A device for automatically presenting fasteners in a predetermined disposition comprising a container (28) for the fasteners which presents the fasteners to a rotary drum (32) which raises the fasteners upwardly for deposit into a chute (21). The fasteners are fed down the chute (21) to a ramp (70) which positions individual fasteners in a predesired position in a feed barrel (22) for receipt by a fastener tool. An escapement mechanism (100) is positioned between the chute (21) and the ramp (70) so that a single fastener at one time falls down the ramp (70) into the feed barrel (22).

EP 0 191 620 A2

# FASTENER PRESENTATION DEVICE

A device for automatically presenting fasteners in a desired position for placement into a fastener application tool or machine.

In the use of fasteners, it is desirable to automatically present the fastener to the fastener application tool or machine in a predetermined disposition. For example, blind fasteners of a rivet-mandrel type are adapted to be secured to workpieces and comprise a hollow rivet with a flange at one end and a headed mandrel having a stem extending through the barrel of the rivet. Upon insertion of the barrel of the rivet into a workpiece opening, the mandrel stem is grasped by a setting tool and pulled so that the mandrel head upsets the rivet body against the unexposed surface of the workpiece. Examples of such tools are shown in U.S. Patent Nos. 3,981,377 and 4,205,547.

There are a variety of different types of generally hand held tools, both manual and powered, that are used to set pull-type blind fasteners. For industrial production, it is desirable to use a power tool that may have an air or electrical power assist to pull the mandrel stem. This facilitates expediting the rivet setting operation. Such tools are normally manually loaded, that is, the mandrel stem is manually inserted into the nose portion of the rivet setting tools. This requires the tool operator to hold the tool with one hand and select the individual blind rivets, from a bulk source, for example, with the other hand and insert the mandrel stem into the nose of the setting tool. This presents a slow and cumbersome rivet handling problem during the rivet setting operation. This operation is illustrative of the necessity of automatically presenting a fastener in a predetermined disposition for placement into a fastener application tool or machine.

Thus, for example, in the use of blind rivet fasteners, it is desirable to provide a device for automatically presenting the mandrel stem in a position for insertion into the nose of the rivet setting tool which eliminates the necessity of the operator manually inserting the mandrel stem into the setting tool during each rivet setting operation. A device of this latter type is illustrated in U.S. Patent No. 3,415,102.

It is also desirable to obtain the rivet from a bulk source and automatically orient individual rivets and place the mandrel stem in a position easily accessible for insertion into the tool.

Devices for feeding different types of fasteners are also shown in U.S. Patent Nos. 2,832,458; 3,276,625; 3,494,014; 3,535,764 and 3,658,207.

It is an object of this invention to provide a device which will select individual fasteners such as rivets, for example, from a bulk source and present the mandrel stem end first to the nose portion of a rivet setting tool. Further, such a device contains a rivet feed barrel having a drive means actuated by the nose of a rivet setting tool to automatically insert the mandrel stem into the nose of a rivet setting tool.

The invention provides a fastener presenting device suitable for headed fasteners comprising a base, an inclined raceway mounted on the base and adapted to support the fasteners by their heads, means for supplying fasteners to an upper portion of the raceway, guide means positioned to receive the fasteners as they drop from the lower end of the raceway and means for releasing the fasteners one at a time from the raceway to fall down the guide means, characterised in that at the foot of the guide means is a barrel disposed on said base in a common vertical plane with raceway and guide means and pointing upwardly and forwardly therefrom, and a plunger reciprocable in said barrel to project forwardly a fastener deposited therein.

In a device as referred to in the last preceding paragraph, said barrel may be shaped at its forward end to receive a tool to which a fastener will be delivered on actuation of said plunger, and means may be provided for actuating said plunger on presentation of the tool to said barrel.

Said means for supplying fasteners to the upper portion of the raceway of a device in accordance with the invention may comprise a drum mounted for rotation about a horizontal axis lying in the plane of the raceway, the drum being open at the front where it overlaps the rear of the raceway and having vanes to raise the fasteners and drop them onto the raceway. On the base of the device may be mounted a container which encloses the raceway and guide means, and provides a floor which slopes rearwardly towards the bottom of the drum and thus provides a hopper for a random supply of fasteners available for pickup by the drum. The container may have a hinged lid to allow access for replenishing the supply of fasteners.

Means for actuating said plunger of a device in accordance with the invention may include a switch arranged to be triggered by the tool on presentation to the barrel. The switch may have an actuating button arranged to be depressed by rearward movement of a cam face of a spring-pressed actuating member mounted to slid back and forth in said barrel and to be pushed rearwardly against its spring pressure by a nosepiece of a tool to depress said switch. Said plunger may be advanced by an electrical solenoid in response to triggering of said switch.

Preferably, in the operation of a device in accordance with the invention rivets pass individually down the raceway through a guide ramp which orients the rivet for positioning in a feed barrel. An open end of the feed barrel receives the nose of the rivet setting tool which actuates a switch to energize a drive means in the feed barrel which pushes the rivet out of the feed barrel and positions the mandrel stem of the rivet into the nose of the setting tool. The chute, or raceway, has spaced inwardly inclined ramp surfaces which permit the mandrel stem to be vertically disposed downward so that the mandrel stem end of the rivet falls down the guide ramp into the feed barrel first regardless of the orientation of the rivet when received on the inclined chute from the rotary drum.

An escapement mechanism is located at the end of the chute to permit only one fastener to fall down the ramp at a time. The escapement mechanism is triggered by the insertion and removal of the nose of the setting tool into feed barrel to permit one fastener to fall down the guide ramp at a time.

This basic approach to orienting a fastener for loading into a tool is applicable to be any headed fasteners and can be used to orient and present such fastener for additional handling or processing.

There now follows a description, to be read with reference to the accompanying drawings, of a fastener presentation device embodying the invention and illustrative thereof. This illustrative device has been selected for description by way of example of the invention and not of limitation thereof.

In the accompanying drawings:-

Figure 1 is a top plan view of the illustrative rivet presentation device;

Figure 2 is a side elevational view;

Figure 3 is a side elevational view partially broken away;

Figure 4 is a perspective view; and

Figure 5(a) to (c) are diagrammatic illustrations of the operation of the escapement mechanism of the illustrative device.

The illustrative rivet presentation device is shown as handling blind rivets to place the rivet in the desired position for use by the setting tool. It should be understood, however, that this invention could be used with other types of flanged fastener to arrange the fastener for presentation to the fastener application tool or machine or for transport to such tool or machine. Additionally, it will become apparent that this device can be used to orient fasteners for additional handling or processing, such as loading the fasteners in carriers.

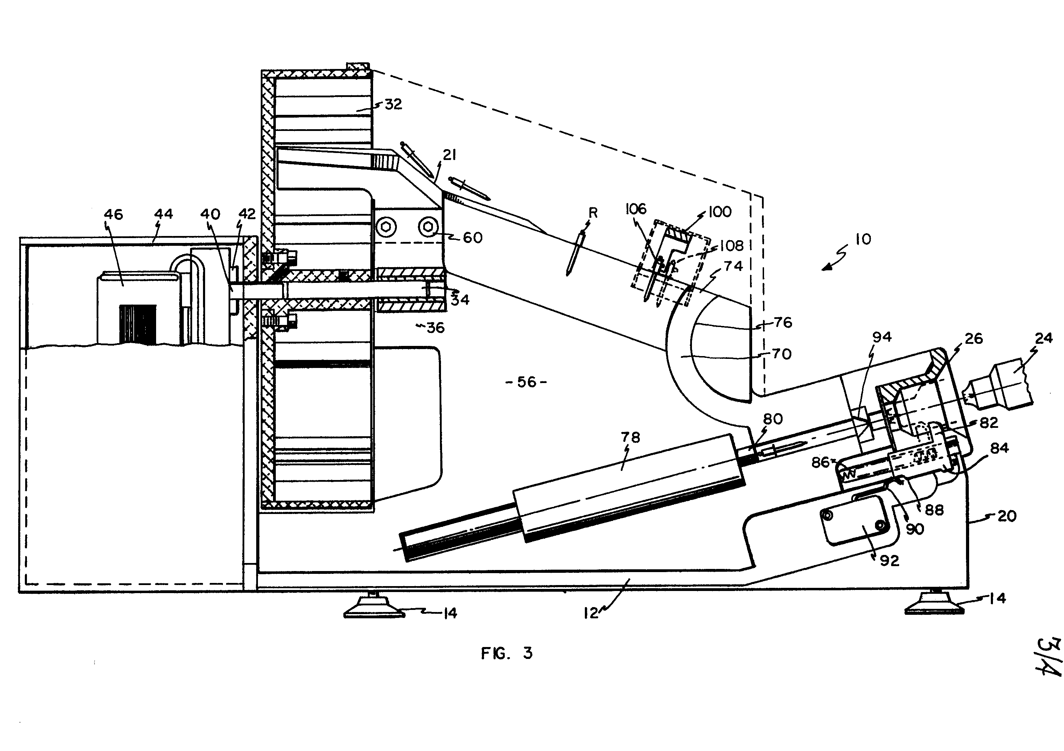

Attention is directed to the drawings which illustrate the rivet presentation device 10 as having a T-shaped base 12 (as viewed in plan) adapted to be mounted to a worksurface by the suction cups 14. Mounted on the crosshead 16 of the base 12 is a drum 32, and mounted on the leg 20 of the base 12 is a bulk supply 18, inclined supply chute 21 and feed barrel 22. The nose 24 (see Figure 3) of a rivet setting tool is adapted to be placed in an opening 26 of the feed barrel 22 to automatically receive the mandrel stem of the rivet, as will become apparent hereinafter.

The bulk supply 18 comprises a truncated cone-shaped container or housing 28 having sloped sides 30 which gravity feed rivets to the drum 32 which is vertically mounted to rotate about a horizontal axis. The container has a lid 27 pivoted to the body of the container for access into the container to load the rivets. The container could have other configurations so long as the rivets are held in bulk and are fed into drum 32. The drum 32 is mounted on a shaft 34 secured at one end, in a bearing 36 on a vertical support 38 extending upwardly from the leg 20 of the base 12. The opposite end 40 (see Figure 3) of shaft 34 is supported in a bearing 42 in a housing 44 which contains a motor 46 for driving the shaft 34 to rotate drum 32. (The drum could be powered by a pneumatic mechanism). The housing 44 is mounted on the crosshead 16 of the base 12.

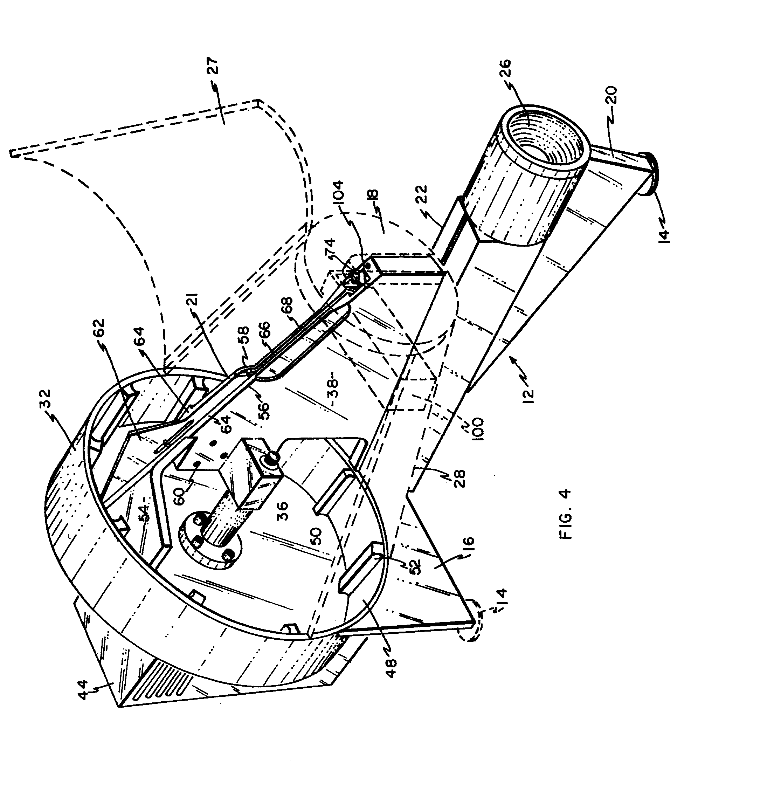

An internal cylindrical surface 48 of the drum 32 contains axially extending vanes 50 adapted to pick up the rivets fed from the container 28. The vanes have dish-shaped faces 52 to retain the rivet as the drum rotates the vanes 50 upwardly (clockwise - Figure 4) to deposit the rivet on a platform 54 of the chute 21. At this point, any excess rivets on the platform 54 will fall back into the container 28 to be recirculated.

The vertical support 38 provides the chute 21 is formed from separate members 56, 58 which are secured together at various locations by fasteners 60. Adjacent the platform 54 of chute 21 on member 58 is an inclined ramp or vane 62, which feeds the rivets down inwardly inclined surfaces 64 of the members 56, 58. The surfaces 64 are spaced to form a slot 66 between which the mandrel stems pass (see Figure 4).

The centre of gravity of a blind fastener normally lies along the exposed part of the mandrel stem which therefore will fall into the slot 66 which vertically aligns the fasteners down the chute 21. The rivet flanges, at this point, rest on the inclined surfaces 64. The inclined surfaces 64 each merge into a straight slotted ramp 68 which gravity feeds the rivets to an escapement mechanism 100 adjacent an unloading guide ramp 70. End 72 of slotted ramp 68 contains an opening 74 above the upper end 76 of a guide ramp 70. The rivets, at this point, will fall mandrel end first down the guide ramp 70 into the feed barrel 22 (see Figure 3).

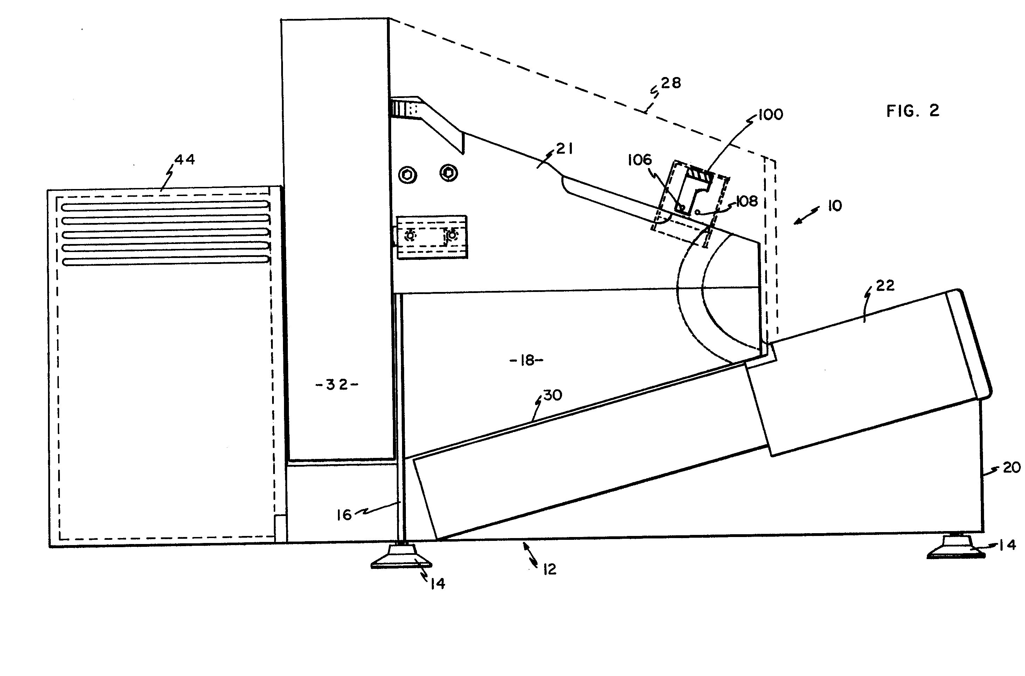

Attention is now directed to Figures 2 and 3 which illustrate the details of the feed barrel 22 and the mechanism for automatically inserting the mandrel stem into the nose 24 of the setting tool.

A solenoid 78 supported between lower portions of members 56, 58 has a plunger or rod 80 against which the head end of the mandrel comes to rest. The nose 24 of the setting tool is inserted into the opening 26 in feed barrel 22. Engagement of the tool nose with an arm 82 on a slide actuator 84 will move the actuator 84 inwardly against the bias of a spring 86 (see Figure 3). A ramp 88 on actuator 84 will force an arm 90 on a switch 92 down to engage the switch to energize the solenoid. The nose 24 is now fully inserted in the opening 26 (see Figure 3) and the solenoid rod 80 will move outward forcing the mandrel stem through a cone-shaped opening 94 and into the nose 24 of the setting tool. Removal of the nose 24 of the tool from the opening 26 will extract the rivet. Thereafter, the spring 86 will return actuator 84 to the position illustrated in Figure 3 and the solenoid rod 80 will be withdrawn and another rivet will be positioned down the guide ramp 70 so that the entire sequence of automatic loading of the rivet into the rivet setting tool can be repeated. (It should be noted that pneumatic power means could be utilized instead of solenoid 78 to push the rivet into the setting tool).

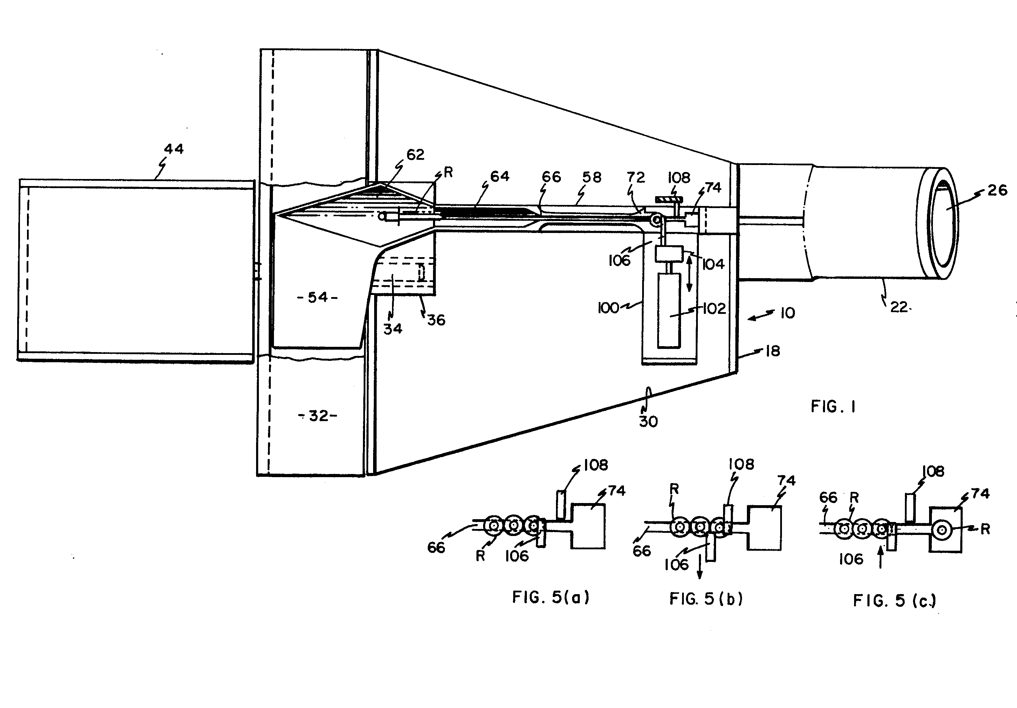

Attention is now directed to Figure 1 and Figures 5(a), (b) and (c) which illustrate the escapement mechanism 100 which permits loading a single rivet at a time into the feed barrel 22. Attached to the member 56 is a solenoid 102 having the bracket 104 carrying opposed spaced pins 106, 108. In the inoperative condition, the rivets will be aligned in the slot 66 and abut the pin 104 (Figure 5a). As the nose of the setting tool triggers actuator 84, the solenoid 102 is withdrawn permitting a single rivet to pass pin 106 and rest against pin 108 (Figure 5b). (The escapement mechanism could also be powered by a pneumatic mechanism). When the nose 24 of the setting tool is withdrawn from the feed barrel 22, the actuator 84 returns and the solenoid 102 is extended permitting the rivet to pass pin 108 and fall down guide ramp 70 (Figure 5c). In this fashion, the feed barrel is loaded with a rivet and the next rivet in sequence is retained on the chute 21 against pin 106 until the preceding rivet is removed from the feed barrel 22.

From the foregoing description, it can be seen that the fasteners are obtained from a bulk source, transported by the drum to the chute which feeds the rivet to the escapement mechanism. The escapement mechanism is activated by the setting tool nose to feed a single rivet at a time down the guide ramp into the feed barrel. The nose of the setting tool also triggers the power means which automatically inserts the mandrel stem into the nose of the setting tool.

From the above description, it should be apparent that the fastener presentation device can be used to properly position the fastener into a container such as the feed barrel 22 for further processing of the fastener.

Also, from the above description, it should be apparent the drive for the drum, fastener insertion means and the escapement mechanism could be powered by a pneumatic or similar mechanical means as well as the control such as the switch 92.

Claims

1. A fastener presenting device suitable for headed fasteners comprising a base, an inclined raceway mounted on the base and adapted to support the fasteners by their heads, means for supplying fasteners to an upper portion of the raceway, guide means positioned to receive the fasteners as they drop from the lower end of the raceway and means for releasing the fasteners one at a time from the raceway to fall down the guide means, characterised in that at the foot of the guide means (70) is a barrel (22) disposed on said base (12) in a common vertical plane with the raceway (21) and guide means (70) and pointing upwardly and forwardly therefrom, and a plunger (80) reciprocable in said barrel to project forwardly a fastener deposited therein.

2. A device according to claim 1 further characterised in that said barrel (22) is shaped at its forward end (26) to receive a tool to which a fastener will be delivered on actuation of said plunger (80).

3. A device according to claim 2 further characterised in that means (78, 84, 92) is provided for actuating said plunger (80) on presentation of the tool to said barrel (22).

4. A device according to claim 1 further characterised in that said means (32) for supplying fasteners to the upper portion of the raceway (21) comprises a drum (32) mounted for rotation about a horizontal axis lying in the plane of the raceway (21), the drum (32) being open at the front where it overlaps the rear of the raceway (21) and having vanes (50) to raise the fasteners and drop them onto the raceway (21, 62, 64).

5. A device according to claim 4 further characterised in that on said base (12) is mounted a container (28) which encloses the raceway (21) and guide means (70), and provides a floor which slopes rearwardly towards the bottom of the drum (32) and thus provides a hopper for a random supply of fasteners available for pickup by the drum.

6. A device according to claim 5 further characterised in that the container (28) has a hinged lid (27) to allow access for replenishing the supply of the fasteners.

7. A device according to claim 3 further characterised in that said means (78, 84, 92) for actuating said plunger (80) includes a switch (92) arranged to be triggered by the tool on presentation to the barrel (22).

8. A device according to claim 7 further characterised in that the switch (92) has an actuating button (90) arranged to be depressed by rearward movement of a cam face (88) of a spring-pressed actuating member (84) mounted to slide back and forth in said barrel, and to be pushed rearwardly against its spring pressure by a nosepiece (24) of a tool to depress said switch (92).

9. A device according to claim 7 further characterised in that said plunger (80) is arranged to be advanced by an electrical solenoid (78) in response to triggering of said switch (92).

10. A device for automatically positioning a fastener in a predetermined, desired disposition, comprising:

    a.    support means;

b. a housing mounted on said support means for receiving a bulk quantity of fasteners;

c. a vertically disposed rotary drum adapted to receive fasteners from said housing and having means to transport the fasteners upwardly during rotation of said drum;

d. Platform means carried on said support means and adapted to receive fasteners from said transport means;

e. chute means coacting with said platform means and adapted to transport the fastener;

f. a ramp means for receiving the fastener from said chute means and placing the fastener in a predetermined, desired disposition in a feed barrel; and

g. drive means coacting with said feed barrel including means to further process the fastener.

1/4

0191620

FIG. 1

FIG. 5 (a)

FIG. 5 (b)

FIG. 5 (c.)

FIG. 2

2/4

0191620

FIG. 3

FIG. 4